# EUROPÄISCHE PATENTANMELDUNG

(11) **EP 1 642 925 A1**
(43) Veröffentlichungstag der Anmeldung: **05.04.2006**
(21) Anmeldenummer: 05014032.6
(22) Anmeldetag: 29.06.2005
(51) Int. Cl.: C08J 3/22, C08J 5/18, C08K 3/00, C08K 9/08, B32B 27/20

(54) **Hochkonzentrierte und feindispergierte Additivmasterbatches in Granulatform**

(30) Priorität: 29.09.2004 DE 102004048098
(71) Anmelder: GRAFE COLOR BATCH GmbH, 99444 Blankenhain (DE)
(72) Erfinder: Grafe, Matthias, 99425 Weimar (DE); Grafe, Michael, 99423 Weimar (DE)
(74) Vertreter: Oehmke, Volker

(57) **Zusammenfassung**

Die Erfindung betrifft die Herstellung von Additivmasterbatches in Granulatform, die insbesondere in der Folienindustrie, speziell bei der Erstellung mono- und biaxial orientierten Folien, zum Einsatz kommen.

Der Erfindung liegt die Aufgabe zugrunde, eine Möglichkeit anzugeben, die Konzentration von Kieselsäure und sonstigen Mineralien wie Titandioxid, Talkum, Bariumsulfat, Kreide, Kaolin sowie Ruß (Carbon Black), die in großen Mengen verarbeitet werden, in Masterbatchformulierungen zu erhöhen.

Durch die Erfindung wird die Dosierbarkeit des Konzentrates bei der Herstellung des Endproduktes verringert und zusätzlich die Dispergierung der Additive im Masterbatch und im Endprodukt stark verbessert.

## Beschreibung

Die Erfindung betrifft die Herstellung von Additivmasterbatches in Granulatform, die insbesondere in der Folienindustrie, speziell bei der Herstellung mono- und biaxial orientierten Folien, zum Einsatz kommen.

Kieselsäure (auch bekannt als Silica) wird als Pulver in der Folienindustrie vorwiegend als Antiblockmittel verwendet.
Ziel eines Antiblockmittels bei der Aufwicklung einer Folienrolle ist, das Ablösen der sehr dünnen Folienbahnen voneinander zu erleichtern. Weiterhin wird Silica in den äußeren Schichten von Mehrschichtfolien verwendet, um die Migration von bestimmten Substanzen, wie Antifog-Additiven, durch einen Blockade-Effekt zu verzögern.
Kieselsäure wird in der Regel entweder aus natürlicher oder synthetischer Quelle eingesetzt. Natürliche Kieselsäure ist kostengünstiger als synthetische, hat jedoch den Verdacht, nach Einatmung durch den Verarbeiter, in der Lunge krebserregend zu wirken. Deshalb wird oft die teuere synthetische Kieselsäure genommen. Das Material ist dennoch sehr voluminös, besitzt eine große Oberfläche und neigt sehr stark zur Staubbildung.
Die übliche Partikelgröße des eingesetzten Kieselsäurepulvers kann von 1 bis 10 Mikrometer sein. Die typische Konzentration von Kieselsäurepartikeln als Antiblockmittel z.B. in BOPP-Folien liegt mehr oder weniger zwischen 1000 und 2000 ppm (parts per million). BOPP-Folien (Biaxial orientierten Polypropylen-Folien) finden im Massenmarkt Anwendung als Verpackungs- und Schutzfolie, u.a. für Zigarettenschachteln oder CDs sowie in metallisierten Filmen.
Üblicherweise beträgt die Konzentration von Kieselsäure in einem Polypropylen-Masterbatch 10 bis maximal 20 Gewichtsprozente (Gew%). Eine weitere Erhöhung der Konzentration der Kieselsäure im PP kann sich negativ auf die Produktqualität des Masterbatches und dessen anschließender Verarbeitung auswirken.

Die bestehenden Probleme mit Antiblockmitteln als Masterbatch für BOPP-Folien können auch weiterhin auftreten, wenn man ein Masterbatch verwendet, das 10 % bis 20% Kieselsäure in PP enthält. Es ist sehr häufig ein überdurchschnittliches Auftreten von Stippen (spots) in der fertigen, transparenten Folie zu beobachten.

Dies führt zwangsläufig zu einer Verminderung der Produktqualität. lm Extremfall ist diese Folie durch die verminderte Qualität und die hohen, zu erfüllenden Anforderungen nicht verkäuflich.

Ähnliche Probleme sind zu beobachten mit anderen Mineralien wie Bariumsulfat, Titandioxid, Talkum, Kaolin, Kreide und auch Ruß. Es können bei der Herstellung von Masterbatches und der anschließenden homogenen Verteilung der Mineralien im Endprodukt Probleme mit der Dispergierung auftreten.
Die Produktion von Additivmasterbatches beschränkt sich in der Regel auf die Verarbeitung der reinen Substanzen, ursprünglich in Pulver-, Flocken- oder flüssiger Form, in ein Granulat, auf der Basis üblicher thermoplastischer Kunststoffe (PE, PP, PVC, PC; PS, EVA, ABS, etc). Damit wird eine saubere und einfachere Dosierung für eine weitere Verarbeitung gewährleistet.
Eine Zugabe von Dispergierhilfsmittel in eine Additivrezeptur, so wie heute üblich bei der Herstellung von Farbpigmentmasterbatches, verbirgt die Gefahr einer verminderten Wirkung der Hauptsubstanz, meistens auf organischer Basis, durch die Anwesenheit des Dispergierhilfsmittels.

Der Erfindung liegt die Aufgabe zugrunde, eine Möglichkeit anzugeben, so dass die Konzentration von Kieselsäure und sonstigen Mineralien wie Titandioxid, Talkum, Bariumsulfat, Kreide, Kaolin sowie Ruß (Carbon Black), die in großen Mengen verarbeitet werden, in Masterbatchformulierungen erhöht werden kann.
Zwei Ziele sollten damit erreicht werden:
- zum Einen sollte die Dosierbarkeit des Konzentrates bei der Herstellung des Endproduktes verringert werden. Üblicherweise liegt die Dosierung z.B. von Kieselsäure (als 20%iges Masterbatch in PP) bei einer monoschichtigen Folie zwischen 1 und 3%. Ziel ist es, die Dosierung entsprechend der erhöhten Konzentration des Masterbatches auf 0,25% bis 0,75% zu reduzieren.
- Zusätzlich sollte die Dispergierung der Additive im Endprodukt, z.B. Kieselsäure in einer transparenten, sehr dünnen PP-Folie mit einer Dicke von 2 bis maximal 100 Mikrometer, stark verbessert werden.
Die Aufgabe wurde dadurch gelöst, dass entgegen der aus dem Stand der Technik bereits bekannten Nutzung von Polypropylen (für Verpackungsfolien) oder Polyethylen (für Gewächshausfolien) als Trägermaterial von Additivmasterbatches, ein anderes Trägermaterial verwendet wird. Da es eine Vielzahl von Dispergierhilfsmittel mit unterschiedlichen physikalisch-chemischen Eigenschaften auf dem Markt gibt, liegt die Besonderheit und Neuheit der Erfindung darin, nur solche Dispergierhilfsmittel als Trägermaterial in hohen Mengen zu verwenden, die zwar in einer Extruderschnecke eingeschmolzen werden, jedoch maßgeblich durch die Art der schonenden Temperaturführung beim Extrusionsprozess in eine stabile Granulatform überführt werden können.
Des weiteren müssen diese Dispergierhilfsmittel eine starke chemische Affinität zu dem Polymer, das die Basis für das Endprodukt bildet, besitzen. Diese chemische Affinität trägt durch die Natur der einzelnen Bestandteile des Dispergierhilfsmittels, neben der Überführung der Gesamtmischung in ein sauber dosierbares Granulat, zum erfolgreichen Gelingen der Erfindung bei. Am Beispiel einer (B)OPP- oder PE-Folie besteht das in Frage kommende Dispergierhilfsmittel aus einer Mischung von niedrigschmelzenden Polyolefinwachsen. Diese Strukturen können problemlos in PP- und PE-Endprodukten eingearbeitet und überführt werden. Vorausgesetzt, bestimmte Verarbeitungsbedingungen und Anforderungen an dem Schmelzvorgang und der Granuliertechnik bei der Masterbatchherstellung sind erfüllt und werden eingehalten.
Der wesentliche Vorteil der Erfindung besteht darin, dass die Dispergierhilfsmittel durch eine schonende Temperaturführung im Extrusionsprozess, in Verbindung mit anorganischen, mineralischen Substanzen als Additivbestandteile verwendet werden. Die Gesamtrezeptur des Masterbatches kommt ohne eine zusätzliche Zugabe von polymerischem Trägermaterial im klassischen Sinne aus. Aus diesem Grund kann das gemäß der Erfindung verwendete Dispergierhilfsmittel als Trägermaterial bezeichnet werden.
Der Vorteil bei der Anwendung von Dispergierhilfsmitteln als Trägermaterialien für anorganische Additive und Füllstoffe liegt zusätzlich in der Verbesserung der Partikeldispergierung im Endprodukt, z. B. in einer sehr dünnen, transparenten BOPP-Folie.

Die Benutzung von Dispergierhilfsmitteln als alleiniges Trägermaterial kann im Prinzip nicht nur auf Kieselsäure erfolgreich angewandt werden. Es gibt eine Reihe von anorganischen Mineralien und Füllstoffen, im Mikro- (bis 10 Mikrometer) und Nanometerbereich (bis 500 nm), die für eine Anwendung in der Folienindustrie (monoxial-, biaxial- Gewächshausfolien, metallisierte Folien, etc) in Frage kommen. Jedoch bereiten die anorganischen Anteile sehr häufig Probleme durch die unzureichende Dispergierung im Endprodukt. Für alle diese Substanzen bietet sich an, eine Verbesserung bei der Homogenisierung und der Verteilung im Endprodukt, gemäß der vorliegenden Erfindung anzuwenden und zu erreichen.
Diese Mineralien und Füllstoffe sind: Titandioxid (Ti02), Kaolin, Kreide (Kalziumkarbonat), Bariumsulfat und Talkum.

Titandioxid zum Beispiel wird in großen Mengen als Weißpigment verwendet.
Auf dem Markt sind zwar bereits Konzentrate aus z.B. 70% TiO₂ und 30% Polymerträger wie PE erhältlich. Jedoch um die exzellente Dispergierung des TiO₂ in dünnwandigen Produkten zu gewährleisten, müssen die Hersteller auf spezielle TiO₂₋Typen zugreifen, die bereits durch ihre physikalischen und chemischen Eigenschaften eine bessere Dispergierung ermöglichen, jedoch teurer sind als gewöhnliches Titandioxid. Durch die Anwendung der vorliegenden Erfindung, wie im Beispiel 2 beschrieben, ist es nun möglich, auch normale und preiswerte TiO₂-Typen zu verwenden. Nicht nur die einfache und saubere Dosierung werden weiter gewährleistet, auch die Verteilung wird somit durch die Anwesenheit des Dispergierhilfsmittels verbessert.

Kreide (Kalziumkarbonat) wird in der Folienindustrie, speziell im Agrarmarkt, als Lightdiffuser in Gewächshausfolien verwendet. Das bedeutet, dass das einfallende Tageslicht innerhalb des Gewächshauses überall gestreut wird. Es wird somit eine Direkteinstrahlung des Lichtes auf das Pflanzengut vermieden. Die meisten Gewächshausfolien sind nach der Herstellung nicht ganz transparent. Um einen optimalen Pflanzenwachstum zu ermöglichen, sollten die Folien eine höchstmögliche Transparenz im Bereich zwischen 400 und 700 nm Wellenlänge gewährleisten. Dies könnte zusätzlich dadurch erreicht werden, dass die Dispergierung und Feinverteilung von Füllstoffen und Mineralien in der Folie gemäß der hier vorliegenden Erfindung und nach dem Beispiel Nr. 3 stark verbessert wird.

Des weiteren wird Kalziumkarbonat-Batch in der BOPP-Industrie als sogenanntes "Perl" Masterbatch verwendet. Durch das Kalziumkarbonat wird ein Perl-Effekt auf der Folie erzeugt. Üblich für Gewächshausfolien auf PE-Basis und BOPP- sowie metallisierte Folien sind 70% Kreide in PE oder PP.
Eine weitere Anwendung ist 40% CaCO₃ in PP als Antisplit-Masterbatch bei der Bändchen-Herstellung.

### Talkum

Talkum ist sehr fein gemahlener Talk. Es ist ein mattweiß schimmerndes und mit einer Härte von 1 das weichste Mineral. Es kristallisiert im monoklinen System und hat die chemische Zusammensetzung Mg₃Si₄O₁₀(OH)₂.
Es hat vielfältige Verwendungsmöglichkeiten :
- als Weißpigment für Glanz- und Spiegelfarben, Schneiderkreide u.a.
- als Trennmittel bei der Herstellung von Pasten und Pudern
- als Lebensmittelhilfsstoff (E553b)
- als Rieselmittel und Trennmittel für Käsescheiben und Süßwaren
- als Füllstoff und Überzugsmittel
- als Füll- und Verstärkungsmittel, insbesondere für die Farben- und Lacktechnologie
- verhindert ein Ankleben in medizinischen Latexhandschuhen oder aber in Latexkleidung.
- verhindert ein Festkleben und Reißen des Schlauches zwischen Fahrradschlauch und Mantel.
Üblich sind 60% Talkum in PP und EVA.

### Kaolin

Kaolin ist ein feiner, eisenfreier, weißer Ton, der noch unzersetzte Feldspatteilchen enthält und zur Papierherstellung und Porzellanbereitung dient (Porzellanerde, Porzellanton). Kaolin wird in Landwirtschaftsfolien als IR-Absorber verwendet.
Es hat in einer Folie die Eigenschaft, die wärmebringenden Anteile der globalen Sonnenstrahlung im Infrarotlicht-Bereich zu absorbieren. Diese Eigenschaft wird standardmäßig als "thermic" bezeichnet.

### Bariumsulfat

Bariumsulfat wird auch üblicherweise mit 70% in PP als Additivmasterbatch angeboten. Als blanc fixe (Permanentweiß) ist das gefällte Bariumsulfat das weiße Pigment in vielen Malerfarben; im Gemisch mit Zinksulfid nennt man es Lithoponeweiß. Zudem verwendet man es als Füllstoff für Papier und Kautschuk. Weitere Verwendung findet es bei Fotopapier.

In Frage kommen für die Herstellung einer erfindungsgemäßen Beimischung in Granulatform, mit einem Dispergierhilfsmittel als Trägermaterial, auch solche Mineralien mit einer durchschnittlichen Partikelgröße in Nanometerbereich, wie zum Beispiel auf Basis von Schichtsilicaten. Die Anwendung von diesen Nanopartikeln in thermoplastischen Erzeugnissen verfolgt zur Zeit das Ziel, deren mechanische sowie deren elektrischleitfähige Eigenschaften zu verbessern. Das grösste Problem ist eine Disgergierung dieser Nanomineralien im Endprodukt, als in einer tatsächlichen Nano-Grösse zu gewährleisten.
Erfindungsgemäss jedoch können diese Nano-Mineralien tatsächlich in einer Nano-Grösse im Endprodukt vorliegen, dass sie endlich den gewünschten Effekt, nämlich die Verbesserung der mechanischen Eigenschaften, aufweisen.

Die Rußtypen für thermoplastische Einfärbungen und die Leitfähigkeitsruße unterscheiden sich in der Oberflächenchemie, Teilchengröße, Porosität und Struktur. Bezüglich der Struktur liegen die meisten Ruße für Farbzwecke als einzelne Partikel vor. Ruße für Leitfähigkeitserhöhung liegen dagegen als längliche Agglomerate vor. Dies ist wichtig, um den Stromfluss beim Kontakt der Teilchen miteinander im Endprodukt zu gewährleisten.
Auch die Verunreinigungen und der eigentliche Herstellungsprozess sind von Typ zu Typ unterschiedlich. Des weiteren sind die physikalisch-chemischen Eigenschaften nicht gleich. Rußtypen für die Erhöhung der Leitfähigkeit zeichnen sich durch einen hohen Wert für die DBP-Absorption (Aufnahmefähigkeit von Öl in die Rußporen) aus, während die Rußtypen für normale schwarze Einfärbungen einen geringen Wert aufweisen.
Speziell die Verbesserung der Homogenisierung von preiswerten Rußtypen im Masterbatch und im Endprodukt (Folie, Extrusions- und Spritzgussware) ist eine offene Frage, die der aktuelle Stand der Technik nicht lösen kann. Tatsache ist, dass besser und feiner dispergierte Rußtypen teuer sind und nicht für alle thermoplastischen Endanwendungen in Frage kommen.
Jedoch bietet die Art der erfindungsgemäßen Mischung den Vorteil, preiswerteren Rußtypen einen Einsatz zu ermöglichen und gleichzeitig die Homogenität durch die Natur des Trägermaterials (Dispergierhilfsmittel) stark zu verbessern.
Zusammenfassend kann man speziell die homogene Verteilung und Dispergierung von solchen Rußtypen (Carbon Blacks, Graphite), die nicht für die normale schwarze Einfärbung bestimmt sind, sondern eine Erhöhung der Leitfähigkeit bewirken, durch die Art der erfindungsgemäßen Nutzung von bestimmten Dispergierhilfsmitteln als Trägermaterial sowohl im Masterbatch selbst als auch im Endprodukt verbessern. Die Stippenbildung im Endprodukt kann somit verhindert werden.
Es können auch Ruß- und Graphittypen (auch bekannt als Carbon Blacks) von beliebiger Größe (von Nanometer- bis Mikrometer-Größen) mit Dispergierhilfsmitteln als Trägermaterial in ein leicht zu handhabendes und sauber dosierbares Granulat erfindungsgemäß überführt werden.

Die Erfindung soll nachfolgend anhand von Ausführungsbeispielen erläutert werden.

| | |
|---|---|
| Beispiel Nr. 1: | 40% und mehr Kieselsäure |
| | 60% und weniger Dispergierhilfsmittel |
| Beispiel Nr. 2: | 70 % und mehr TiO₂ |
| | 30% und weniger Dispergierhilfsmittel |
| Beispiel Nr. 3: | 60% und mehr Kreide |
| | 40% und weniger Dispergierhilfsmittel |
| Beispiel Nr. 4. | 70% und mehr Bariumsulfat |
| | 30% und weniger Dispergierhilfsmittel |
| Beispiel Nr. 5: | von bis zu 60% und mehr Talkum |
| | mehr als 40% und weniger Dispergierhilfsmittel |
| Beispiel Nr. 6. | 20% und mehr einer Ruß (Carbon Black )-Type |
| | 80% und weniger Dispergierhilfsmittel |
| Beispiel Nr. 7: | 50% und mehr eines beliebigen Minerals in Nanometergrößen (von bis zu 500 nm) |
| | 50% und weniger Dispergierhilfsmittel |

## Patentansprüche

1. Hochkonzentrierte und feindispergierte Additivmasterbatches in Granulatform,
**dadurch gekennzeichnet,**
**dass** die Granulate aus einem oder mehreren anorganischen, mineralischen Füllstoffen als Additive und einem Wachs oder Dispergierhilfsmittel als Trägermaterial bestehen.

2. Additiv-Masterbatch in Granulatform nach Anspruch 1, **dadurch gekennzeichnet, dass** als anorganische, mineralische Füllstoffe: Kieselsäure, Talkum, Kaolin, Kreide (Kalziumkarbonat), Titandioxid oder Bariumsulfat, mit einer durchschnittlichen Partikelgröße sowohl im Nanometer-Bereich von bis zu 500 nm als auch in Mikrometer-Bereich von bis zu 10 Mikrometer, in reiner Form oder als Mischung mit anderen organischen und/oder anorganischen Stoffen, verwendet werden.

3. Additiv-Masterbatch in Granulatform nach Anspruch 1, **dadurch gekennzeichnet, dass** sonstige mineralisch, anorganische Füllstoffe, wie Mischoxyde und Schichtsilikate, speziell mit einer durchschnittlichen Partikelgröße von bis zu 500 Nanometer auch in Verbindung mit einem Wachs oder Dispergierhilfsmittel als Trägermaterial, in ein gut dispergierbares Masterbatch-Granulat überführt werden.

4. Mischung von einem oder mehreren Ruß-Typen (Carbon Black, Graphitpulver) als leitfähiges Additiv, und von einem Wachs oder Dispergierhilfsmittel als Trägermaterial, **dadurch gekennzeichnet,**
**dass** sie beide in ein leicht dosierbares Granulat durch einen vorherigen Extrusionsprozess überführt werden.

5. Additiv-Masterbatch in Granulatform nach einem der Ansprüche 1 bis 4, **dadurch gekennzeichnet,**
**dass** das Dispergierhilfsmittel eine chemische Kompatibilität zur Polymerbasis des Endproduktes aufweist, und bei tieferen Temperaturen als die üblichen durch ein Extrudierprozess (ein-/ oder doppelschneckig) geschmolzen, gefahren und granuliert wird.

6. Additiv-Masterbatch in Granulatform nach einem der Ansprüche 1 bis 5, **dadurch gekennzeichnet,**
**dass** das Dispergierhilfsmittel aus einer Mischung von verschiedenen Polyolefinwachsen besteht.

7. Folien auf Basis von PP, PET, PA, EVA, PE und vergleichbaren Thermoplasten sowie Kombinationen von denen, die **dadurch gekennzeichnet sind,**
**dass** sie unter Nutzung von Granulaten gemäss einem oder mehreren der Ansprüche 1 bis 6 hergestellt werden.

8. Nach Anspruch 7, **dadurch gekennzeichnet, dass** die Folien, zum Beispiel als Verpackungs- oder als Landwirtschaftsfolien, gleichzeitig eine oder mehrere der folgenden Eigenschaften besitzen: monoaxiale oder biaxiale Orientierung und monoschichtiger oder mehrschichtiger Aufbau.

9. Thermoplastische Erzeugnisse, die unter Einsatz der Materialien, die gemäss eines oder mehrerer der Ansprüche 1 bis 8 beschrieben wurden, hergestellt worden sind.
